# EUROPEAN PATENT APPLICATION

(11) **EP 4 428 878 A1**
(43) Date of publication of application: **11.09.2024**
(21) Application number: 21939583.7
(22) Date of filing: 03.12.2021
(51) Int. Cl.: H01F 41/02, H01F 41/00, H01F 27/26, H01F 27/32, C08L 101/00, C08L 81/02, C08L 77/00, C08L 67/02

(54) **METHOD FOR ENCAPSULATING MAGNETIC CORE BY USING LOW-PRESSURE INSERT INJECTION MOLDING, AND MAGNETIC CORE ENCAPSULATED USING SAME**

(30) Priority: 03.11.2021 KR 20210149880
(71) Applicant: Chang Sung Co., Cheongju-si, Chungcheongbuk-do 28146 (KR)
(72) Inventor: BAHNG, Sung Sik, Siheung-si, Gyeonggi-do 21934 (KR); KIM, Hyeon, Hwaseong-si, Gyeonggi-do 18357 (KR)
(74) Representative: Zinkler, Franz
(86) International application number: PCT/KR2021/018181
(87) International publication number: WO 2023/080326

(57) **Abstract**

According to an embodiment of the present disclosure, it is possible to provide an effect of reducing overall process costs by minimizing the number of process steps, an effect of ensuring predetermined radial crushing strength by performing an encapsulation process by using low-pressure insert injection molding without an impregnation process, and an effect of providing a toroidal magnetic core having magnetic properties that less decrease.

## Description

### [Technical Field]

The present disclosure relates to a method of encapsulating a magnetic core and a product, and more particularly, to an encapsulation method that reduces process costs by encapsulating a magnetic core by using low-pressure insert injection molding and maintains radial crushing strength while minimizing a decrease in magnetic properties of a final magnetic product.

### [Background Art]

Processes of manufacturing toroidal magnetic core products used to convert electric power and used as filters include an encapsulation process of encapsulating finished parts of toroidal magnetic cores. The encapsulation process may prevent cracks in cores and scratches on coils, which occur because of wires during a winding process, defective insulation between magnetic cores and coils, and corrosion and erosion caused by exposure to outside air.

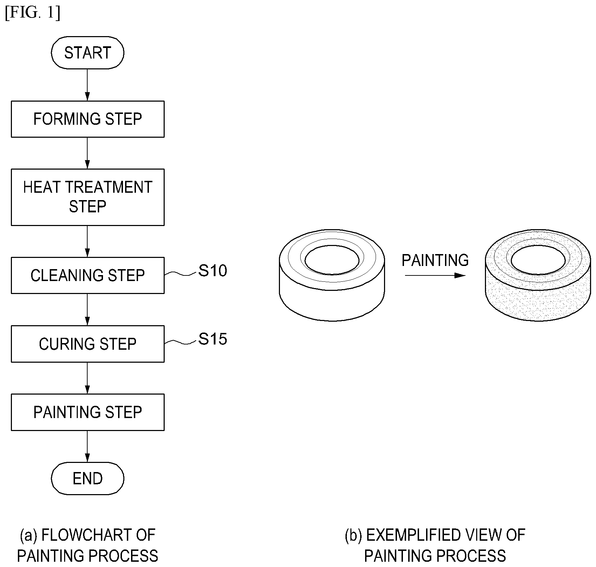

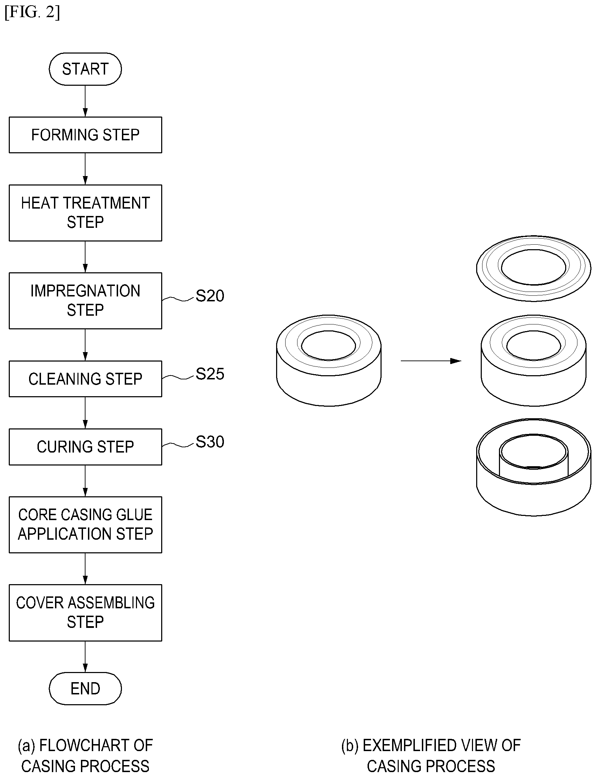

The encapsulation methods include two methods including a painting process that uses painting as illustrated in FIG. 1, and a plastic casing process that assembles a casing as illustrated in FIG. 2. One of the two methods, which is suitable for the process of encapsulating the magnetic core, is appropriately selected and used.

However, in the case of the painting process and the casing process, a cleaning process S10 followed by painting and casing, a curing process S15 or an impregnation process S20, a cleaning process S25, and a curing process S30 are added to ensure a predetermined level or higher of radial crushing strength of a painting core and a casing core. The impregnation process S20 or the curing process S15 or S30 is considered an essential process for maintaining the radial crushing strength and thus cannot be eliminated. For this reason, there is a problem in that the unit price is also necessarily increased.

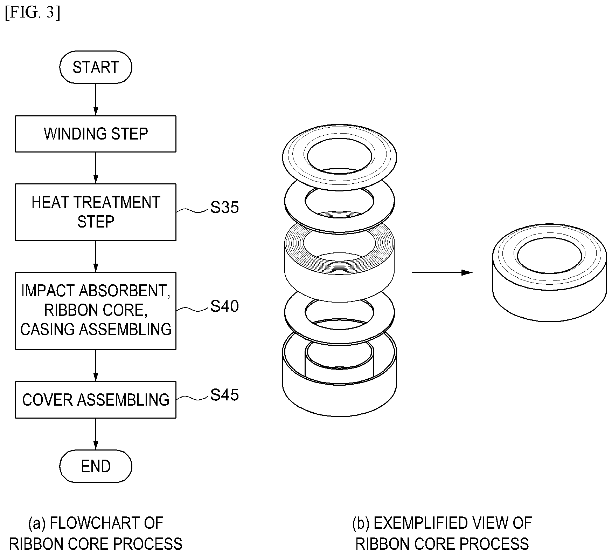

In addition, as can be seen from FIG. 3, there is a problem in that a ribbon core process in the related art is limited to a casing method to which additional impact absorbing materials are added to prevent deterioration in properties caused by a pressure occurring during a winding process, prevent deterioration in properties caused by internal penetration of a molding liquid, when a molding liquid potting process is performed, and caused by an inflation pressure occurring during a process of curing the molding liquid, and prevent deterioration in properties caused by vibration and impact occurring during an operation in a field.

In addition, in a case in which a toroidal magnetic core product is manufactured by insert injection molding in the related art, magnetic properties very greatly deteriorate, and cracks occur in accordance with radial crushing strength of products. In particular, in the case of a Permalloy product having magnetostriction up to 30 um/m and an MPP high-magnetic-permeability product (after heat treatment) with low radial crushing strength, there is a problem in that a core loss greatly increases and a product crack very easily occurs.

### [Document of Related Art]

### [Patent Document]

(Patent Document 1) Korean Patent No. 10-2054299

### [DISCLOSURE]

### [Technical Problem]

A technical object of the present disclosure is to provide a method of encapsulating a magnetic core, in which a simple process of a toroidal encapsulation method solves a first problem that process costs are excessively high.

Another technical object of the present disclosure is to provide a method of encapsulating a magnetic core that solves a second problem that radial crushing strength cannot be ensured when encapsulation is performed without an impregnation process even though an impregnation solution, a cleaning solution, and a solution harmful to an environment in which the impregnation process, a cleaning process, and a curing process are used.

Still another technical object of the present disclosure is to provide a method of encapsulating a magnetic core and a product that solve a third problem that magnetic properties of a magnetic core final product severely deteriorate when insert injection molding is used.

Yet another technical object of the present disclosure is to provide a method of encapsulating a magnetic core and a product that solve a fourth problem that there is a need for an encapsulation method capable of integrally coating cores, having various shapes, such as a stacked toroidal core or a bobbin serving part.

Technical problems to be solved by the present disclosure are not limited to the above-mentioned technical problems, and other technical problems, which are not mentioned above, may be clearly understood from the following descriptions by those skilled in the art to which the present disclosure pertains.

### [Technical Solution]

To achieve the above-mentioned technical objects, an embodiment of the present disclosure provides a method of encapsulating a magnetic core using an insert injection molding process, the method including: an insert object seating step of seating a magnetic core, as an insert object, in a mold; and an encapsulation compound layer forming step of forming a polymer encapsulation compound layer on a surface of the magnetic core by encapsulating the surface of the magnetic core in a polymer compound by injection-molding the polymer compound while keeping an interior of the mold at a low pressure.

In the embodiment of the present disclosure, the magnetic core may be a magnetic core having a toroidal structure.

In addition, in the embodiment of the present disclosure, the insert object seating step may include a step of stacking a plurality of magnetic cores vertically, and the plurality of magnetic cores may be integrally encapsulated.

In this case, the number of magnetic cores may be two or more or six or less.

In addition, in the embodiment of the present disclosure, the insert object seating step may further include an accessory seating step of seating an accessory other than the magnetic core, and the polymer encapsulation compound layer may integrally encapsulate the magnetic core and the accessory other than the magnetic core.

In this case, the accessory other than the magnetic core may include a shape such as a bobbin, a reinforcing stand, or a support for fastening and fixing a structure or a protruding shape such as a winding split rib.

In this case, the encapsulation compound layer forming step may include any one of integrated injection molding that injection-molds the magnetic core and the accessory other than the magnetic core at the same time and additional injection molding that injection-molds the magnetic core and the accessory other than the magnetic core at different times.

In addition, in the embodiment of the present disclosure, the polymer compound in the encapsulation compound layer forming step may include a super engineering plastic compound.

In this case, the super engineering plastic compound may be a thermoplastic super engineering plastic compound.

In this case, the thermoplastic super engineering plastic compound may include one or more selected from a group consisting of polyphenylene sulfide (PPS), polyphthalamide (PPA), polybutylene terephthalate (PBT), and liquid crystal polymer (LCP).

In addition, in the embodiment of the present disclosure, the low pressure may be 100 kgf/cm² or lower.

To achieve the above-mentioned technical objects, another embodiment of the present disclosure provides a magnetic core encapsulated by the encapsulation method.

### [Advantageous Effect]

According to the embodiment of the present disclosure, the encapsulation process does not include an impregnation step, a cleaning step, and a curing step, which makes it possible to provide the first effect capable of reducing overall process costs by minimizing the number of process steps. The encapsulation process is performed by the low-pressure insert injection molding without the impregnation process, which makes it possible to provide the second effect capable of ensuring predetermined radial crushing strength and excluding an impregnation solution and a cleaning solution harmful to an environment and a human body by excluding the impregnation process. The low-pressure insert encapsulation process is performed, which makes it possible to provide the third effect of reducing a decrease in magnetic properties of the final magnetic product and increasing withstand voltage properties.

The effects of the present disclosure are not limited to the above-mentioned effects, and it should be understood that the effects of the present disclosure include all effects that may be derived from the detailed description of the present disclosure or the appended claims.

### [Description of Drawings]

FIGS. 1 to 3 are views illustrating methods of encapsulating a painting core, a casing core, and a ribbon core in the related art.
FIG. 4 is a flowchart of a method of encapsulating a magnetic core using an insert injection molding process according to an embodiment of the present disclosure.
FIGS. 5 and 6 are exemplified views of a magnetic core including an encapsulation compound layer manufactured by the method of encapsulating a magnetic core according to the embodiment of the present disclosure.
FIG. 7 is a view illustrating a magnetic core in which a plurality of magnetic cores is vertically stacked and integrally encapsulated.
FIGS. 8 to 10 are views illustrating magnetic cores encapsulated integrally with accessories such as a bobbin or a reinforcing stand.

### [Mode for Invention]

Hereinafter, the present disclosure will be described with reference to the accompanying drawings. However, the present disclosure may be implemented in various different ways and is not limited to the embodiments described herein. A part irrelevant to the description will be omitted in the drawings in order to clearly describe the present disclosure, and similar constituent elements will be designated by similar reference numerals throughout the specification.

Throughout the present specification, when one constituent element is referred to as being "connected to (coupled to, in contact with, or linked to)" another constituent element, one constituent element can be "directly connected to" the other constituent element, and one constituent element can also be "indirectly connected to" the other element with other elements interposed therebetween. In addition, unless explicitly described to the contrary, the word "comprise/include" and variations such as "comprises/includes" or "comprising/including" will be understood to imply the inclusion of stated elements, not the exclusion of any other elements.

The term "magnetic core" used throughout the specification means a metal object having magnetism.

The terms used in the present specification are used only for the purpose of describing particular embodiments and are not intended to limit the present disclosure. Singular expressions include plural expressions unless clearly described as different meanings in the context. In the present specification, it should be understood the terms "comprises," "comprising," "includes," "including," "containing," "has," "having" or other variations thereof are inclusive and therefore specify the presence of stated features, integers, steps, operations, elements, components, or combinations thereof, but do not preclude the presence or addition of one or more other features, integers, steps, operations, elements, components, or combinations thereof.

Hereinafter, the embodiment of the present disclosure will be described with reference to the accompanying drawings.

FIGS. 1 to 3 are views illustrating methods of encapsulating a painting core, a casing core, and a ribbon core in the related art.

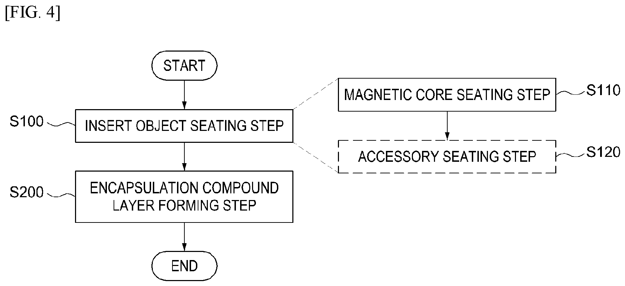

FIG. 4 is a flowchart of a method of encapsulating a magnetic core using an insert injection molding process according to an embodiment of the present disclosure.

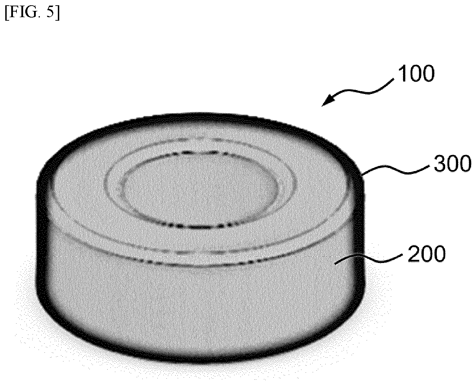

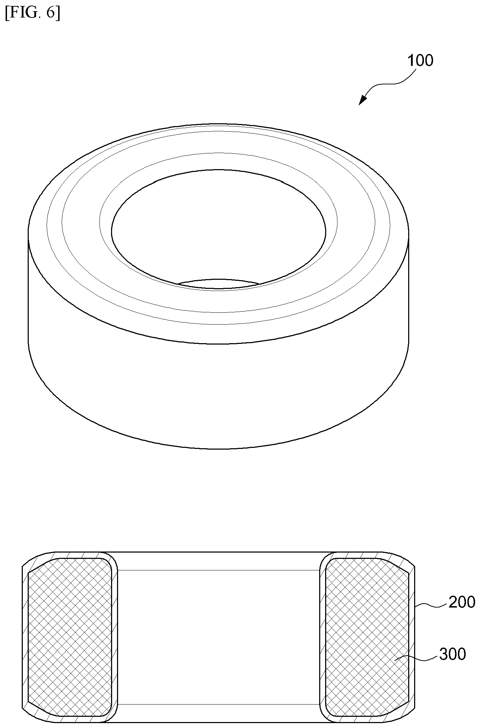

FIGS. 5 and 6 are exemplified views of a magnetic core including an encapsulation compound layer manufactured by the method of encapsulating a magnetic core according to the embodiment of the present disclosure. Hereinafter, an embodiment of the present disclosure will be described with reference to FIGS. 1 to 6.

The embodiment of the present disclosure provides a method of encapsulating a magnetic core using an insert injection molding process, the method including: an insert object seating step S100 of seating a magnetic core 200, as an insert object, on a mold; and an encapsulation compound layer forming step S200 of forming a polymer encapsulation compound layer 300 on a surface of the magnetic core by injection molding a polymer compound while maintaining a low pressure in the mold and by encapsulating the surface of the magnetic core in the polymer compound.

As can be seen from FIGS. 5 and 6, a final magnetic product 100 including the magnetic core 200 and the polymer encapsulation compound layer 300 surrounding the magnetic core 200 is formed by performing the encapsulation method.

The method of encapsulating the magnetic core 200 using an insert injection molding process according to the present disclosure is an encapsulation method having fewer process steps than an encapsulation method using a painting core and a casing core in the related art and thus is significantly economical in terms of process costs.

That is, the method of encapsulating a magnetic core using an insert injection molding process according to the embodiment of the present disclosure does not include an impregnation step S20, cleaning steps S10 and S25, and curing steps S15 and S30, unlike the encapsulation method using the painting core and the casing core in the related art.

In this case, the impregnation step S20 means a step of improving properties of an object in accordance with the purpose of use by allowing a gaseous or liquid substance to penetrate into a porous object. The reason why the above-mentioned processes are included in the process in the related art is to allow an impregnation liquid to penetrate into fine pores in powder constituting the magnetic core, cure the impregnation liquid, and fill the pores, thereby increasing radial crushing strength.

The method of encapsulating the magnetic core 200 using the insert injection molding process according to the present disclosure excludes the impregnation, cleaning, and curing processes and includes the encapsulation step using the insert injection molding instead of a painting process, such that it is possible to ensure predetermined radial crushing strength and prevent a decrease in radial crushing strength that may occur because of the exclusion of the three types of process steps.

Hereinafter, the insert object seating step S100 will be described.

The step S100 includes a step S 110 of seating the magnetic core 200, as an insert object, in the mold. In addition, the step S100 may include an accessory seating step S120 of seating various accessories, as necessary by a user, as described below.

In this case, the magnetic core 200 may be a magnetic core having various shapes, for example, a magnetic core having various shapes such as a toroidal structure, a plate-shaped structure, a ribbon structure, and the like. However, it should be interpreted that the present invention is not limited to the example, and all the structures of the magnetic core capable of achieving the object and effect of the present disclosure belong to the scope of the present disclosure.

In addition, the magnetic core 200 may include, for example, one or more selected from a group consisting of Fe, Ni, Mo, Si, and Cr, but the present disclosure is of course not limited to the example. The user may select the component of the magnetic core, as necessary, in accordance with an industrial or technical field that requires the final magnetic product 100.

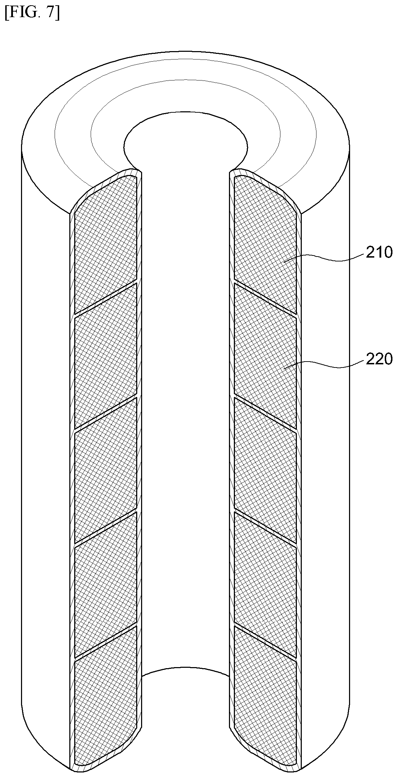

FIG. 7 is a view illustrating a magnetic core in which a plurality of magnetic cores is vertically stacked and integrally encapsulated. Hereinafter, a method of encapsulating magnetic cores by stacking the multiple magnetic cores will be described with reference to FIG. 7.

As described below, the encapsulation method according to the present disclosure may form the final magnetic product 100 by integrating several accessories by injection molding several accessories or magnetic cores together in an injection molding step.

In this case, the insert object seating step S 100 may sequentially seat the plurality of magnetic cores and integrally injection-molding and encapsulating the plurality of magnetic cores, thereby providing the encapsulation method including a step of stacking a plurality of magnetic cores 210 and 220 vertically and integrally encapsulating the plurality of magnetic cores in the encapsulation compound layer.

In the technical field in which the plurality of magnetic cores is stacked and used, there is a problem that when the magnetic cores are separately encapsulated, a coating layer for encapsulating the magnetic cores separates the magnetic cores after the magnetic cores are stacked, which degrades electrical properties. Further, there is a problem in that a separate process is required to integrally fix the magnetic cores and a problem in that the stacked shape is unstable if the magnetic cores are not fixed. In contrast, the above-mentioned problems are solved as the plurality of magnetic cores is integrally encapsulated.

In this case, the plurality of magnetic cores may be magnetic cores that are two or more or six or less in number or stacked at a height of 150 mm or less.

An upper limit of a range of the number of magnetic cores 210 and 220 may vary depending on a width or surface area of the magnetic core 200 to be used and the type of super engineering plastic that is a polymer compound used in the encapsulation compound layer forming step S200.

However, if the number of stacked magnetic cores 210 and 220 exceeds six, the magnetic cores are weakened to an external force in a vertical direction of the layered structure. For this reason, cracks occur in the encapsulation compound layer and damage the encapsulation compound layer. In addition, if a structure made by stacking a plurality of products is lengthened by 150 mm or more in the vertical direction, it is impossible to configure the injection mold for injection molding the encapsulation compound layer.

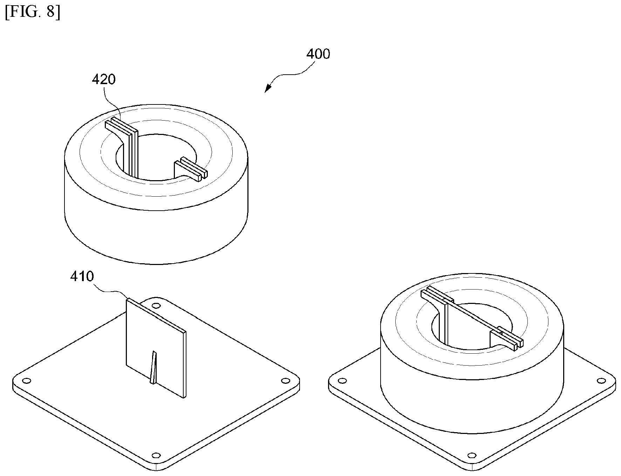

FIGS. 8 to 10 are views illustrating magnetic cores encapsulated integrally with accessories such as a bobbin or a reinforcing stand. Hereinafter, the insert object seating step S 100 further including the accessory seating step S 120 will be described with reference to FIGS. 8 to 10.

The insert obj ect seating step S 100 may further include the accessory seating step S120 of seating various accessories 400 and 500 in addition to the magnetic core, such that an integrated magnetic core including various accessories in an encapsulation compound layer may be manufactured.

In this case, specifically, the accessories may be accessories corresponding to the bobbin or the reinforcing stand, but the present disclosure is not limited thereto. The accessories may include various accessories required to use the magnetic core.

In this case, the components of the bobbin and the reinforcing stand may be particularly identical to the components of the encapsulation compound layer 300, but the present disclosure is not limited thereto. The bobbin and reinforcing stand having components such as thermoplastic resin made of polyphenylene sulfide (PPS), polyphthalamide (PPA), or polybutylene terephthalate (PBT) may be used.

In this case, the encapsulation compound layer forming step S200 of encapsulating the magnetic core and the accessories other than the magnetic core may use any one of integrated injection molding that injection-molds the magnetic core and the accessories other than the magnetic core at the same time and additional injection molding that injection-molds the magnetic core and the accessories other than the magnetic core at different times.

When the integrated injection molding is performed, a separate assembly process between the accessories and the magnetic core may be eliminated. In contrast, when the additional injection molding is performed, an assembling shape may be injection-molded first on a surface of the magnetic core, and additional shapes and assembly properties of the accessories are improved. Therefore, the additional injection molding may be used in the case of the accessory having a complicated shape. In addition, the method may be appropriately selected in accordance with the usage situation, and the injection molding timing may be determined, in consideration of the industrial and technical fields intended to be used by the user, complexity of structures of the accessories, and the like.

In the additional injection molding process in the encapsulation compound layer forming step S200, a reinforcing stand 400 having a first-first coupling portion 410 may be coupled to an encapsulation compound layer of a magnetic core having a second-first coupling portion 420. In this case, as can be seen from FIG. 8, the coupling process may couple the coupling portions so that the coupling portion penetrates a central portion of the toroidal magnetic core.

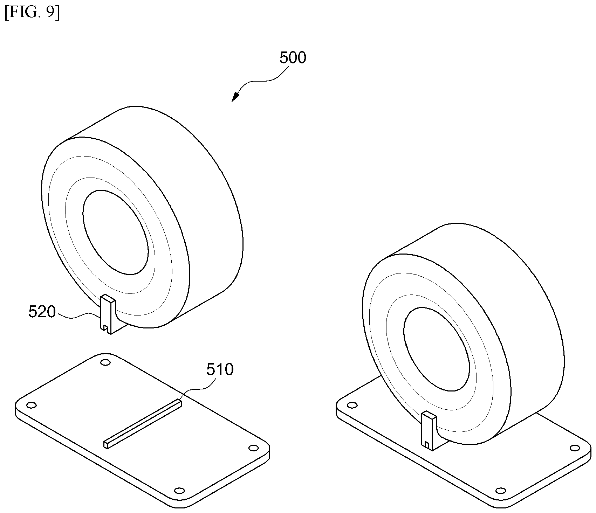

In another additional injection molding process, a reinforcing stand 500 having a first-second coupling portion 510 may be coupled to an encapsulation compound layer of a magnetic core having a second-second coupling portion 520. In this case, as can be seen from FIG. 9, the coupling process may couple the magnetic core so that the magnetic core stands vertically.

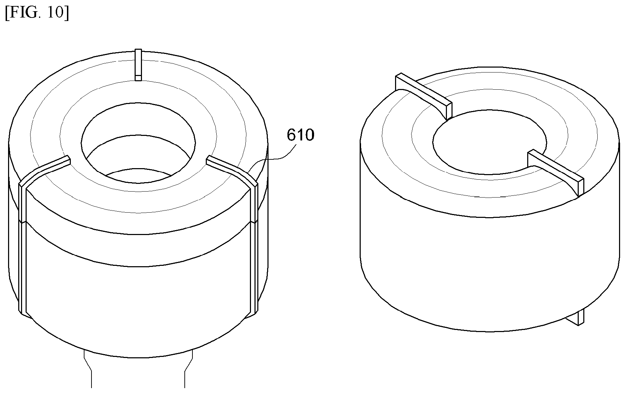

In still another additional injection molding process, an encapsulation compound layer of a magnetic core having split ribs 610 may be coupled, as can be seen from FIG. 10. In this case, the split ribs 610 serve to divide a space so that the rib shapes vertically stand to make eccentric winding or split winding in accordance with the functions.

Hereinafter, the encapsulation compound layer forming step S200 will be described.

The encapsulation compound layer forming step S200 is a step of forming a polymer encapsulation compound layer on the surface of the magnetic core by injection-molding (S210) a polymer compound in a mold having the magnetic core positioned therein in the insert obj ect seating step S100 and encapsulating the surface of the magnetic core in the polymer compound.

In this case, the polymer compound may include a super engineering plastic compound. The super engineering plastic compound has high heat resistance and mechanical strength and excellent dimension stability and electrical properties, such that the super engineering plastic compound is appropriately used for the encapsulation compound layer 300.

In this case, specifically, the super engineering plastic compound may be a thermoplastic super engineering plastic compound. For example, the thermoplastic super engineering plastic compound may include one or more resins selected from the most thermoplastic resins made of polyphenylene sulfide (PPS), polyphthalamide (PPA), polybutylene terephthalate (PBT), liquid crystal polymer (LCP), and the like, but the present disclosure is not limited to the example.

In addition, in the encapsulation compound layer forming step S210 of injection-molding the polymer compound, a temperature of the mold used for the injection molding process may be maintained to be 90°C to 150°C, an injection molding pressure may be maintained as a low pressure, an injection rate of the polymer compound of the injection machine may be maintained to be higher than 0 mm/s and equal to or lower than 50 mm/s, and a process time may be 5 seconds or less.

In this case, the low pressure may be maintained to be 100 kgf/cm² or lower. In this case, if the pressure exceeds 100 kgf/cm², the pressure excessively increases, which adversely affects the magnetic properties of the final product.

Therefore, the insert injection molding process is performed in a low-pressure state in which the pressure is maintained to be 100 kgf/cm² or lower, it is possible to obtain the soft magnetic metal powder core having the surface encapsulated in the thermoplastic engineering plastic.

Hereinafter, the present disclosure will be described in more detail with respect to examples and experimental examples. However, the present disclosure is not limited to the examples and the experimental examples.

### Example 1

A toroidal magnetic core was manufactured by the encapsulation process according to the embodiment of the present disclosure. The specific process steps are as follows.

The magnetic core was manufactured by performing compression molding on soft magnetic metal powder. The heat treatment was performed on the magnetic core, and then the injection molding process, which replaces the impregnation, curing, and painting process, was performed. In this case, the core was used as an insert object, the insert object was inserted into the injection mold, and the thermoplastic super engineering plastic resin was applied onto the surface of the soft magnetic metal powder core through the injection molding process, such that the encapsulation compound layer was formed on the surface of the magnetic core.

As described above, the toroidal magnetic core could be successfully manufactured by performing the process step.

### Example 2

A toroidal magnetic core in which two magnetic cores were integrally encapsulated was manufactured by stacking the two magnetic cores and then integrally encapsulating the two magnetic cores according to the embodiment of the present disclosure. The specific process steps are as follows.

In Example 2, the toroidal magnetic core was manufactured through a method identical to the method in Example 1, except that the two magnetic cores were injection-molded in the step of performing injection molding using a mold in an environment in which the magnetic core of Example 1 was stacked and inserted into the mold.

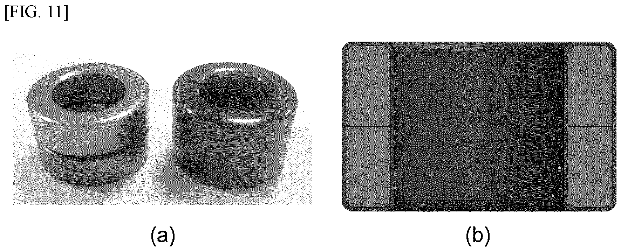

FIG. 11 is a view illustrating the embodiment of the toroidal magnetic core made by encapsulating, in a lump, the two magnetic cores manufactured in Example 2.

As can be seen from FIG. 11, the toroidal magnetic core made by encapsulating the two stacked magnetic cores in a lump could be successfully manufactured by the process step in Example 2.

### Example 3

A bobbin-integrated toroidal magnetic core was manufactured by injection-molding a bobbin in the encapsulation compound layer forming step according to the embodiment of the present disclosure. The specific process steps are as follows.

In Example 3, the toroidal magnetic core was manufactured through a method identical to the method in Example 1, except that the bobbin was injection-molded in the step of injection-molding the super engineering plastic in Example 1.

As described above, the bobbin-integrated toroidal magnetic core could be successfully manufactured by performing the process step.

### Experimental Example 1

In Experimental Example 1, an experiment for checking a degree of decrease in magnetic properties of the toroidal magnetic core manufactured in Example 1 was performed. A specific experiment method in Experimental Example 1 is as follows.

In Experimental Example 1, a product made by generally encapsulating the toroidal magnetic core and a product made by using the magnetic core encapsulation method according to the present disclosure were manufactured and compared in terms of properties.

The experimental result is shown in Table 1 below. According to Experimental Example 1 described above, it can be seen that the use of the magnetic core encapsulation method according to the present disclosure may reduce the degree of decrease in magnetic properties and manufacture the product with a small core loss in comparison with the generally encapsulated products in the related art.

**[Table 1]**

| **Entry** | **Permalloy powder magnetic core (Magnetic permeability 60µ)** | **Permalloy powder magnetic core (Magnetic permeability 125µ)** | **Ni-Fe-Mo powder magnetic core (Magnetic permeability 60µ)** | **Ni-Fe-Mo powder magnetic core (Magnetic permeability 125µ)** |
|---|---|---|---|---|
| | **Core loss (mW/cc)** | **Core loss (mW/cc)** | **Core loss (mW/cc)** | **Core loss (mW/cc)** |
| **Entry 1** | 207 | 300 | 144 | 249 |
| **Entry 2** | 170 | 242 | 135 | 226 |
| **Entry 3** | 175 | 251 | 131 | 233 |
| **Entry 4** | 179 | 250 | 122 | 218 |

In Table 1, Entry 1 means a painted product painted by using a painting method in the related art, Entry 2 means a painted product according to the present disclosure that is encapsulated in polyphenylene sulfide resin, Entry 3 means a painted product according to the present disclosure that is encapsulated in polyphthalamide resin, and Entry 4 means a painted product according to the present disclosure that is encapsulated in polybutylene terephthalate resin.

### Experimental Example 2

In Experimental Example 2, an experiment for checking a degree at which radial crushing strength of the toroidal magnetic core manufactured in Example 1 was maintained was performed. A specific experiment method in Experimental Example 2 is as follows.

In Experimental Example 2, a product made by generally encapsulating the toroidal magnetic core and a product made by using the magnetic core encapsulation method according to the present disclosure were manufactured and compared in terms of strength by using a radial crushing strength device.

According to Experimental Example 2 described above, it can be seen that the use of the magnetic core encapsulation method according to the present disclosure may maintain the radial crushing strength even though the impregnation process or the like is not included, unlike the other encapsulation methods in the related art. The result is shown in Table 2 below.

**[Table 2]**

| **Toroidal core size** | **Product in related art** | **Product according to present disclosure encapsulated in polyphenylene sulfide resin** |
|---|---|---|
| | **Strength (kgf/cm²)** | **Strength (kgf/cm²)** |
| **Ø23** | 49.7 | 69.9 |
| **Ø27-1** | 100 | 136.2 |
| **Ø27-2** | 111.5 | 121.3 |
| **Ø33** | 98.9 | 101.5 |

### Experimental Example 3

In Experimental Example 3, an experiment for checking withstand voltage properties of the toroidal magnetic core manufactured in Example 1 was performed. A specific experiment method in Experimental Example 3 is as follows.

In Experimental Example 3, a product was manufactured by using the magnetic core encapsulation method according to the present disclosure, an invented product according to the present disclosure was simply prepared to test an extreme situation, and the insulating test was performed. A withstand voltage test was performed under two types of conditions of 2.0 seconds and 60 seconds at AC @5.0 kV by using a withstand voltage device.

The experimental result is shown in Table 3 below. According to Experimental Example 3 described above, it can be seen that the use of the magnetic core encapsulation method according to the present disclosure may maintain the excellent withstand voltage properties in comparison with the toroidal magnetic core that is encapsulated by general painting in the related art and has a restriction in withstand voltage properties of 1.0 kV

**[Table 3]**

| **5.0 kV @60 Hz, 60 sec, 1 mA↓ (Withstand voltage tester Max 5kV)** | | | |
|---|---|---|---|
| **Encapsulation method** | **Experimental sample** | **Insulation** | **Pass or fail in insulation** |
| | | **Average leakage current [mA]** | **Need to be 1 mA or lower** |
| **Entry A** | **Entry A.1** | 1.00 (After 30 sec) | Fail |
| | **Entry A.2** | 0.16 | Pass |
| | **Entry A.3** | 0.14 | Pass |
| **Entry B** | **Entry B.1** | 0.09 | Pass |
| | **Entry B.2** | 0.12 | Pass |
| | **Entry B.3** | 0.10 | Pass |
| | **Entry B.4** | 0.12 | Pass |
| **Entry C** | **Entry C** | 0.10 | Pass |
| **Entry D** | **Entry D.1** | 0.13 | Pass |
| | **Entry D.2** | 0.12 | Pass |
| | **Entry D.3** | 0.10 | Pass |
| | **Entry D.4** | 0.12 | Pass |

In Table 3, Entry A means a product group using a painting method in the related art, Entry B means a product group according to the present disclosure that is encapsulated in polyphenylene sulfide resin, Entry C means a product according to the present disclosure that is encapsulated in polyphthalamide resin, and Entry D means a product group according to the present disclosure that is encapsulated in polybutylene terephthalate resin.

It will be appreciated that the embodiments of the present disclosure have been described above for purposes of illustration, and those skilled in the art may understand that the present disclosure may be easily modified in other specific forms without changing the technical spirit or the essential features of the present disclosure. Therefore, it should be understood that the above-described embodiments are illustrative in all aspects and do not limit the present disclosure. For example, each component described as a single type may be carried out in a distributed manner. Likewise, components described as a distributed type can be carried out in a combined type.

The scope of the present disclosure is represented by the claims to be described below, and it should be interpreted that the meaning and scope of the claims and all the changes or modified forms derived from the equivalent concepts thereto fall within the scope of the present disclosure.

### [Description of Reference Numerals]

100: Final magnetic product
200: Magnetic core
210, 220: Plurality of stacked magnetic cores
300: Encapsulation compound layer
400: Reinforcing stand
410: First-first coupling portion of reinforcing stand
420: Second-first coupling portion of encapsulation compound layer
500: Reinforcing stand
510: First coupling portion of reinforcing stand
520: Second-second coupling portion of encapsulation compound layer
610: Split rib

## Claims

1. A method of encapsulating a magnetic core using an insert injection molding process, the method comprising:
an insert object seating step of seating a magnetic core, as an insert object, in a mold; and
an encapsulation compound layer forming step of forming a polymer encapsulation compound layer on a surface of the magnetic core by encapsulating the surface of the magnetic core in a polymer compound by injection-molding the polymer compound while keeping an interior of the mold at a low pressure.

2. The method of claim 1, wherein the magnetic core is a magnetic core having a toroidal structure.

3. The method of claim 1, wherein the insert object seating step comprises a step of stacking a plurality of magnetic cores vertically, and the plurality of magnetic cores is integrally encapsulated.

4. The method of claim 3, wherein the number of magnetic cores is two or more or six or less.

5. The method of claim 1, wherein the insert object seating step further comprises an accessory seating step of seating an accessory other than the magnetic core, and the polymer encapsulation compound layer integrally encapsulates the magnetic core and the accessory other than the magnetic core.

6. The method of claim 5, wherein the accessory other than the magnetic core comprises any one of a bobbin, a reinforcing stand, a support, and a winding split rib.

7. The method of claim 5, wherein the encapsulation compound layer forming step comprises any one of integrated injection molding that injection-molds the magnetic core and the accessory other than the magnetic core at the same time and additional injection molding that inj ection-molds the magnetic core and the accessory other than the magnetic core at different times.

8. The method of claim 1, wherein the polymer compound in the encapsulation compound layer forming step comprises a super engineering plastic compound.

9. The method of claim 8, wherein the super engineering plastic compound is a thermoplastic super engineering plastic compound.

10. The method of claim 9, wherein the thermoplastic super engineering plastic compound includes one or more selected from a group consisting of polyphenylene sulfide (PPS), polyphthalamide (PPA), polybutylene terephthalate (PBT), and liquid crystal polymer (LCP).

11. The method of claim 1, wherein the low pressure is 100 kgf/cm² or lower.

12. A magnetic core encapsulated by the encapsulation method according to claim 1.
